**Europäisches Patentamt**

**European Patent Office**

**Office européen des brevets**

(11) Veröffentlichungsnummer: **0 009 149**
**B1**

(12) **EUROPÄISCHE PATENTSCHRIFT**

(45) Veröffentlichungstag der Patentschrift:
14.10.81

(21) Anmeldenummer: **79103214.7**

(22) Anmeldetag: **30.08.79**

(51) Int. Cl.³: **A 01 J 5/04**, A 01 J 7/00

(54) **Sammelstück.**

(30) Priorität: **05.09.78 DE 2838705**

(43) Veröffentlichungstag der Anmeldung:
**02.04.80 Patentblatt 80/7**

(45) Bekanntmachung des Hinweises auf die Patenterteilung:
**14.10.81 Patentblatt 81/41**

(84) Benannte Vertragsstaaten:
**AT BE CH IT NL SE**

(56) Entgegenhaltungen:
**DE-C-1 152 569**
**DE-U-1 907 621**
**DE-U-1 941 522**
**DE-U-7 209 785**
**US-A-2 627 840**

(73) Patentinhaber: **BIO-MELKTECHNIK SWISS Hoefelmayr & Co., Steinwichslenstrasse 20, CH-9052 Niederteufen (CH)**

(72) Erfinder: **Hoefelmayr, Tilman, Dr., Steinwichslenstrasse 20, CH-9052 Niederteufen (CH)**

(74) Vertreter: **Patentanwälte Dipl.-Ing. A. Grünecker, Dr.-Ing. H. Kinkeldey, Dr.-Ing. W. Stockmair,, Dr. rer. nat. K. Schumann, Dipl.-Ing. P.H. Jakob, Dr. rer. nat. G. Bezold Maximilianstrasse 43, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Sammelstück

Die Erfindung betrifft ein Sammelstück mit einem ersten topfbodenförmigen Teil, dessen innere Mantelfläche sich konisch erweiternd nach außen erstreckt und als eine erste Gleitfläche ausgebildet ist, mit einem zweiten kegelstumpfförmigen Teil, dessen außenliegende Mantelfläche als eine zweite Gleitfläche ausgebildet ist, die dichtend gegen die erste Gleitfläche anliegt, mit vier jeweils mit einem Melkbecher verbindbaren Zuleitungen, deren Enden jeweils in der ersten Gleitfläche münden, und mit einer der Zahl der Zuleitungen entsprechenden Zahl von Ableitungen, wobei in einer ersten gegenseitigen Drehstellung des topfbodenförmigen und des kegelstumpfförmigen Teils die Zu- und Ableitungen über Öffnungen in der Mantelfläche des kegelstumpfförmigen Teils miteinander verbindbar und in einer zweiten Drehstellung jeweils absperrbar sind (DD-A-41 115).

Nach übereinstimmenden Feststellungen führender Wissenschaftler ist jede zweite Kuh unterschwellig euterkrank (subklinische Mastitis). Dies bedeutet z. B. in der Bundesrepublik Deutschland einen volkswirtschaftlichen Schaden von mindestens 500 Mill. DM pro Jahr. Die Erreger von Euterkrankheiten werden praktisch ausschließlich über die Strichkanalöffnung übertragen. Daher sind seit vielen Jahren breitgestreute intensive Bemühungen im Gange, die Erregerübertragung durch gezielte hygienische Vorbeugemaßnahmen herabzudrücken. Diese zusätzlichen Maßnahmen bestehen insbesondere aus peinlich genauer Euterreinigung und Trockenreibung der Zitze mit Wegwerfpapiertüchern vor dem Melken, Zwischendesinfektion des Melkzeuges jeweils vor dem Anlegen an eine neue Kuh, Eintauchen der Zitze in eine Desinfektionslösung nach jedem Melken und Trockenstellen aller Kühe mit Langzeitantibiotika. Trotz dieser jahrelang aufwendigen hygienischen Maßnahmen konnte die Neuinfektionsrate nicht nennenswert herabgesetzt werden. Diese Tatsache beweist, daß die Infektionsübertragung hauptsächlich während des Milchentzugs stattfinden muß. Aus diesem Grunde erscheint die Rolle der Melkmaschine bei der Mastitisübertragung in jüngster Zeit in einem neuen Licht, und Wissenschaftler in aller Welt befassen sich intensiv mit der Melkmaschine als Mastitisüberträgerin. Neuere Untersuchungen haben ergeben, daß die Milch beim Melken im heute gebräuchlichen Melkzeug nicht nur in einer Richtung von der Zitze wegfließt, sondern auch mehr oder weniger regelmäßig aus dem Sammelstück gegen die Zitzen zurückströmt. Dieser Rückstrom kann, wie nachgewiesen wurde, Mikroorganismen von einem kranken Viertel des Euters auf die noch gesunden Viertel derselben Kuh oder der nachfolgenden gemolkenen Kühe übertragen. Es wird angenommen, daß hierin der häufigste Grund für die neuauftretende Mastitisinfektionen zu suchen ist. Der Rückstrom von Milch wird hauptsächlich durch zwei voneinander weitgehend unabhängige Ursachen ausgelöst: Von der Pumpwirkung des pulsierenden Zitzengummis und von Lufteinbrüchen beim Ansetzen und Abnehmen des Melkzeuges sowie von Falschluft am Zitzengummikopf. Durch die Pumpenwirkung des pulsierenden Zitzengummis entstehen, verstärkt durch die Massenträgheit der im Melkzeug transportierten Milch, für das Melkgeschehen sehr unerwünschte zyklische Vakuumschwankungen im Innenraum des Melkbechers. Bisher hat man versucht, diese Druckschwankungen und das damit verbundene Zurückströmen von Milchpfropfen gegen die Zitzenspitze hin durch ein vergrößertes Volumen des Sammelstückes zu vermeiden. Hierbei wird jedoch offensichtlich die Milch, und das um so mehr, je größer das Sammelstück ist, in feine Aerosole zerstäubt. Durch Druckunterschiede in den einzelnen Melkbechern kann hierbei bewirkt werden, daß die Aerosole mit einer Geschwindigkeit bis zu 20 Meter pro Sekunde gegen eine andere Zitze beschleunigt werden und aufgrund ihrer hohen Geschwindigkeit hierbei den gesunden Schließmuskel direkt durchschießen. Solche Druckunterschiede treten insbesondere bei Wechseltaktbetrieb auf, wenn eine Seite schließt, während die andere öffnet. Noch gefährlicher sind Lufteinbrüche, die etwa durch schlechtsitzendes Milchzeug oder besonders leicht gegen Ende eines Melkvorganges auftreten. Hierbei ist nicht die Zitze gefährdet, an der der Lufteinbruch am Zitzengummi auftritt, sondern vielmehr sind aufgrund des Druckgefälles die übrigen Zitzen gefährdet. Aus diesem Grund erscheint eine völlige Trennung der Milchabteilung der einzelnen Euterviertel (Viertelgemelksmaschine) dringend geboten.

Aus »Proceedings of the International Symposium on Maschine Milking« Febr. 78, sind bereits Viertelgemelksmaschinen nach dem Zweiraumprinzip bekannt, um zu Zuchtzwecken die Verteilung der Milchleistung der einzelnen Viertel einer Kuh zu bestimmen. Bei diesen Viertelgemelksmaschinen, bei denen als Sammelstück lediglich vier entsprechend gebogene Röhrchen von der Nennweite der Milchschläuche mit äußeren Verstrebungen zu einer Einheit verbunden sind, traten jedoch enorme zyklische Vakuumschwankungen auf, die dazu führen konnten, daß Vakuumspitzen bis nahe an das absolute Vakuum erreicht wurden. Hierdurch wurden aber die Zitzen mechanisch geschädigt, weshalb derartige Viertelgemelksmaschinen für den Dauerbetrieb indiskutabel sind.

Bei einer anderen bekannten Viertelgemelksmaschine werden die Nachteile der starken zyklischen Vakuumschwankungen dadurch beseitigt, daß auf eine Pulsierung ganz verzichtet wird (sog. Einraumbecher). Derartige Maschinen konnten sich jedoch nicht durchsetzen, weil aufgrund der nichtvorhandenen Druckstimulation der Kuh durch den Pulsvorgang des Zitzengummis die Milchleistung und die Länge der Laktationsdauer der Kühe im Vergleich zu anderen Standardmaschinen wesentlich absanken.

Eine befriedigende Viertelgemelksmaschine ließ sich erst verwirklichen, nachdem das System des periodischen Lufteinlassens in der Entlastungsphase und ein entsprechender Melkbecher mit einem pulsatorgesteuerten Ventil entwickelt wurden. Erst aufgrund dieser Entwicklung wurde es möglich, auf ein ansonsten benötigtes Dämpfungsvolumen, was notwendigerweise im Sammelstück vorgesehen wurde, zu verzichten.

Aus der eingangs berücksichtigten DD-Patentschrift 41 115 ist bereits eine Euterviertelgemelksmaschine bekannt, die eine sogenannte Viertelzentrale aufweist, bei der ein erstes topfbodenförmiges Teil vorgesehen ist, in dem eine kegelstumpfförmige Aussparung ausgebildet ist. Die Kegelfläche dieser Aussparung bildet eine erste Gleitfläche, in die jeweils Milchzuleitungen und Milchableitungen münden, wobei jeweils die Milchzuleitungen und Milchableitungen paarweise in verschiedenen Mittellängsachsenebenen liegend angeordnet sind. In die kegelstumpfförmige Aussparung ist ein entsprechend förmlich ausgestalteter Kegelstumpf einpaßbar, dessen äußere Kegelfläche an sich dichtend gegen die Innenfläche der kegelstumpfförmigen Ausnehmung anliegt. In dem Kegelstumpf sind jeweils in dem den paarweise Anordnungen von jeweils einer Zuleitung und einer Ableitung entsprechenden Mittellängsachsenebenen entsprechenden Winkelabständen Ausnehmungen vorgesehen. Diese Ausnehmungen verbinden in einer ersten Stellung des Kegelstumpfes in Bezug auf das erste Teil jeweils eine Zuleitung mit einer entsprechenden Ableitung, während in einer zweiten Stellung des Kegelstumpfes in Bezug auf das erste Teil alle Zu- und Ableitungen voneinander getrennt sind. Obwohl diese Viertelzentrale eine verhältnismäßig geringe Bauhöhe aufweist und eine einfache Absperrmöglichkeit für alle Milchabführleitungen vorsieht, ist sie für den praktischen Gebrauch aus mehreren Gründen dennoch nicht geeignet. Zunächst ergeben sich in dem Sammelstück aufgrund der äußerst scharfen Umlenkung des Milchflusses um einen Winkel von etwa 145° zwischen den Milchzuleitungen und den Milchableitungen in Verbindung mit einem äußerst kleinen Umlenkradius, der durch die kleine Bauhöhe des Sammelstückes bedingt ist, besonders schlechte Strömungsverhältnisse. Es entstehen hierdurch Strömungsschatten, die schlechte Reinigungsbedingungen für die heute üblichen Zirkulationsreinigungsverfahren ergeben. Außerdem tritt durch die starke Umlenkung des Milchflusses eine starke Zunahme der Strömungsverluste auf, die sich als starke Vakuumverluste an der Zitze, insbesondere bei hohen Milchflüssen bemerkbar machen. Dieser Verlust ist deshalb so schädlich, weil er durch ein höheres Vakuumniveau in der Leitung ausgeglichen werden muß, um zu verhindern, daß das Melkzeug bei höherem Milchfluß abfällt. Diese Erhöhung des Nennvakuums in der Milchabführleitung bewirkt jedoch, daß dieses hohe Vakuum bei geringen Milchflüssen bzw. beim Blindmelken voll an der Zitze wirksam wird. Deshalb ist die Aufgabe zu stellen, diese Strömungsverluste im Melkzeug, insbesondere im Sammelstück, auf ein Minimum zu reduzieren, um mit einem niedrigen Nennvakuum auszukommen. Weiterhin bewirkt die konstruktive Ausgestaltung des Sammelstücks derart, daß die Milchabführleitung sternförmig von dem Sammelstück wegführen, eine zwangsläufig notwendige Umleitung wenigstens zweier Milchabführschläuche um etwa 135°, was bei dem aufgrund des angelegten Vakuums notwendigen Durchmesser der Milchabführschläuche zu einem spinnenförmigen Gebilde um das Sammelstück herum mit erheblichem Durchmesser führt. Dies beeinträchtigt erheblich den Melkvorgang, da die Gefahr besteht, daß das Melkzeug abfällt, weil die Kuh darauftritt, und das Melkzeug sowie die Schläuche dadurch beschädigt werden. Ferner wird durch diese Ausgestaltung des Sammelstücks die allgemeine Handhabung des Melkzeugs während der Melkarbeit erschwert, und es wird erheblich der Aufwand für die Reinigung des Melkzeugs erhöht.

Aus der DD-Patentschrift 54 518 war auch eine Vorrichtung zum gleichzeitigen Anschließen von zwei zu einem Melkzeug führenden Zuleitungen an zwei unter Druck stehende, normalerweise über Kopf verlegte Rohrleitungen bekannt, nämlich der Milchtransport- und der Vakuumleitung. Bei der Anordnung sind die Milchtransport- und Vakuumleitung mit in einem Block ausgebildeten Leitungen verbunden, deren Enden in einer ebenen Gleitfläche münden. Auf der ersten Gleitfläche ist ein eine zweite ebene Gleitfläche aufweisendes Drehteil derart angeordnet, daß die beiden Gleitflächen dichtend gegeneinander anliegen. In Öffnungen des Drehteils ist ein zwei Anschlußstutzen aufweisendes Anschlußteil einsteckbar, das durch Verdrehung zusammen mit dem Drehteil in eine erste Stellung gebracht werden kann, in der die beiden Leitungen des Anschlußteils mit den zu der Milchtransport- und Vakuumleitung führenden Leitungen fluchten. In einer zweiten Drehstellung werden die Enden der Anschlußleitungen durch das Drehteil verschlossen, und das Anschlußstück ist von dem Drehteil abziehbar. Diese bekannte Anordnung betrifft kein Sammelstück und ist auch als ein solches nicht verwendbar, da die Vorrichtung bei einer Erweiterung der vier Anschlußleitungen völlig unhandlich würde, und weil zum anderen eine solche Anordnung keine ausreichende Bodenfreiheit garantieren würde. Darüber hinaus würden aufgrund der notwendigen Umlenkung der Milchflüsse dieselben Schwierigkeiten in Bezug auf das wirksame Melkvakuum auftreten, wie bei der vorstehend erläuterten bekannten Viertelzentrale.

Aus den deutschen Gebrauchsmustern 19 07 621 und 19 41 522 ist auch bereits ein Sammelstück mit einem an diesem angeordneten Pulsator bekannt, bei denen die Milch jedoch nicht in getrennten Leitungen, sondern in einem einzigen Schlauch abgeführt wird. Dieser einzige Milchabführschlauch ist mit einem Rohrstück verbunden, in dessen seitlichen Wandungen vier Öffnungen vorgesehen sind, die mit den Öffnungen in einer Zylinderwandung zur Fluchtung gebracht werden können, der auf dem Rohrstück koaxial zu diesem verschiebbar aufgesetzt ist. Mit den Öffnungen in dem Zylinder sind die Milchabführleitungen von den Melkbechern verbunden. An dem Zylinder ist weiterhin ein Pulsator befestigt. Mit diesem Sammelstück soll erreicht werden, daß der an den Melkbechern anliegende Unterdruck automatisch gesperrt wird, wenn das Melkzeug ungewollt vom Euter abfällt.

Der Erfindung liegt die Aufgabe zugrunde, ein Viertelgemelkssammelstück der eingangs erwähnten Art derart weiterzubilden, daß bei Beibehaltung der niedrigen Bauhöhe und der einfachen Betätigungsmöglichkeit der Absperrung bessere Strömungsverhältnisse und eine bessere Handhabbarkeit des Melkzeugs im praktischen Einsatz gewährleistet werden.

Diese Aufgabe wird erfindungsgemäß dadurch gelöst, daß das kegelstumpfförmige Teil ebenfalls topfbodenförmig ausgebildet ist und daß dessen Mantelwandung von den Ableitungen durchsetzt wird, die mit ihren Enden derart in die Öffnungen der zweiten Gleitfläche münden, daß in der ersten gegenseitigen Drehstellung des ersten und zweiten Teils die Ableitungen mit den entsprechenden Zuleitungen fluchten.

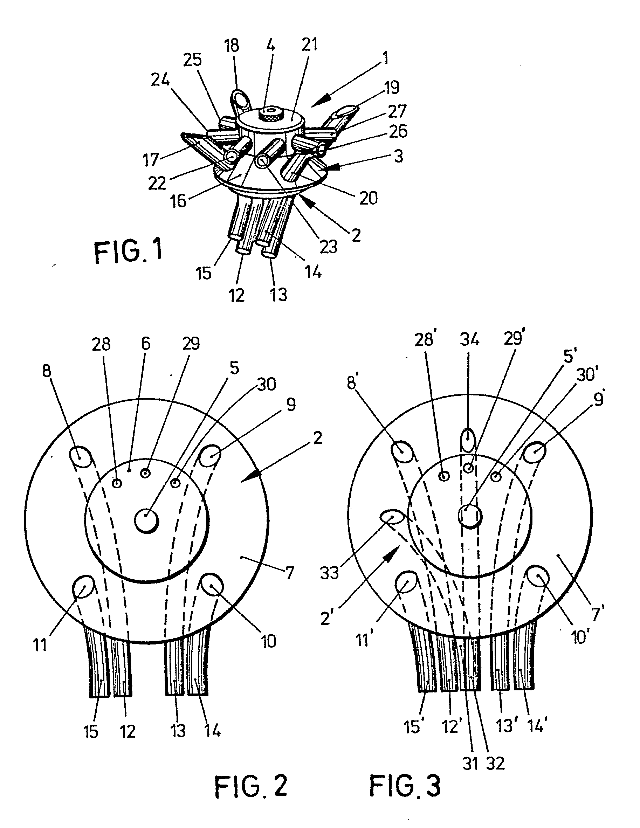

Bei dem erfindungsgemäßen Sammelstück fluchten in der Verbindungsstellung die Zuleitungen mit den Ableitungen, d. h. die Leitungen sind in dieser Stellung glatt durchgehend. Das führt zu dem für die Praxis entscheidenden Vorteil, daß das gesamte Melkzeug in einem einfachen Durchspülverfahren gereinigt werden kann, ohne daß nach jedem Melken eine Zerlegung der einzelnen Teile notwendig ist. Das Auftreten von Strömungsschatten sowie von Strömungsverlusten ist beseitigt. Weiterhin ergibt sich dadurch, daß die Ableitungen jeweils in der Gleitfläche des kegelstumpfförmigen Teils münden, daß die Ableitungen von dieser zweiten Gleitfläche ausgehend praktisch aufeinander zu verlaufen und unmittelbar unterhalb dieses kegelstumpfförmigen Teils zu einem in dieselbe Richtung führenden Bündel von Rohrleitungen zusammengefaßt werden können. (Siehe Fig. 1.) Dadurch wird eine äußerst raumsparende Ausbildung des Sammelstücks mit gleichzeitig ausreichender Bodenfreiheit gewährleistet. Die mit den Ableitungen verbindbaren Schläuche können in einem Bündel gefaßt bis zu dem Sammelstück geführt werden, was die Möglichkeit eröffnet, einen einzigen, vier Durchleitungen aufweisenden Melkschlauch zu verwenden. Dadurch wird eine übersichtliche Schlauchführung ermöglicht, und es kann durch eine entsprechende Führung der Ableitungen an dem Sammelstück verhindert werden, daß es zu einer Auflage der Anschlußschläuche bzw. des einzigen Anschlußschlauches auf dem Boden kommt. Damit wird die Forderung des freien Herabhängens des Sammelstückes von den Zitzen gewährleistet. Weiterhin bietet die gebündelte Abführung der Ableitungen von dem zweiten Teil den Vorteil, daß diese gebündelten Ableitungen beim Anlegen des Unterdrucks an die Melkbecher dem Landwirt eine gute Angriffsmöglichkeit bieten, wenn dieser mit der einen Hand das erste oder obere Teil des Sammelstücks ergreift und mit der anderen Hand das Bündel von Schläuchen erfaßt, um das erste und zweite Teil des Sammelstücks gegeneinander zu verdrehen.

Bei einem Melkzeug, bei dem neben den Milchabführleitungen auch Pulsatorleitungen zu den Melkbechern geführt sind, wird das Sammelstück vorzugsweise derart ausgebildet, daß ein Pulsatordruckverteilerstück mit jeweils einer Zuleitung zu einem Melkbecher und einer Zuleitung zu dem Verteilerstück für Gleichtaktbetrieb oder zwei Zuleitungen zu dem Verteilerstück für Wechseltaktbetrieb an entweder dem topfbodenförmigen Teil oder dem kegelstumpfförmigen Teil, vorzugsweise an dem topfbodenförmigen Teil, ausgebildet ist. Hierdurch ergibt sich auch für mit Pulsation betriebene Melkzeuge eine besonders kompakte Anordnung, weil alle Milchabführleitungen wie auch Pulsatorunterdruckleitungen an dem Sammelstück zusammenlaufen.

Als melktechnisch und eutergesundheitlich besonders zweckmäßig ist eine Anordnung anzusehen, mit der sowohl der Unterdruck aus allen Milchabführleitungen mit einem Handgriff an die Melkbecher und gleichzeitig mit demselben Handgriff auch der Pulsatordruck an alle Melkbecher angelegt werden kann. Dies wird mit Hilfe eines Sammelstückes erreicht, das derart ausgestaltet ist, daß das Ende der einen Zuleitung zu dem Pulsatordruckverteilerstück für Gleichtaktbetrieb oder die Enden der beiden Zuleitungen zu dem Pulsatordruckverteilerstück für Gegentaktbetrieb jeweils in der ersten Gleitfläche mündet bzw. münden und daß eine der Zahl der Zuleitungen zu dem Pulsatordruckverteilerstück entsprechende Zahl von Verbindungsleitungen mit dem Pulsator vorgesehen sind, deren Anfang bzw. Anfänge jeweils in der zweiten Gleitfläche liegen und diese durchsetzen, und daß das Ende der Zuleitung bzw. die Enden der Zuleitungen derart in Bezug auf den Anfang der Verbindungsleitung bzw. die Anfänge der Verbindungsleitungen angeordnet sind, daß diese in der ersten Stellung der beiden Gleitflächen miteinander ausgerichtet sind und in der zweiten Stellung der beiden Gleitflächen jeweils von diesen verschlossen werden. In diesem Falle lassen sich die Milchabführleitungen wie auch die Pulsatorleitungen zu einem gemeinsamen Bündel zusammenfassen.

Um die Reibung der beiden Gleitflächen aufeinander bei gleichzeitig guter Dichtung zu vermindern und dadurch die Handhabbarkeit des Sammelstückes zu verbessern, wird wenigstens eine der beiden Gleitflächen mit einem die Gleitung verbessernden Feststoff, vorzugsweise einem polymeren Kunststoff beschichtet. Als besonders zweckmäßig hat sich eine Beschichtung mit einem Polytetrafluoräthylen erwiesen.

Um das Einstellen des Sammelstücks auf die erste bzw. zweite Stellung der beiden Gleitflächen aufeinander zu erleichtern, werden vorzugsweise an den beiden Gleitflächen miteinander zusammenwirkende Rastvorrichtungen ausgebildet, die in der ersten und der zweiten Stellung der Gleitflächen miteinander einrasten.

Besonders vorteilhaft für eine gute Handhabbarkeit des Melkzeuges im praktischen Einsatz ist es, wenn das Sammelstück so ausgebildet ist, daß es keinen Zutritt von Schmutz gestattet, möglichst keine Hohlräume aufweist, in denen sich Milch festsetzen kann und das Sammelstück trotzdem leicht zerlegbar ist, um es reinigen zu können. Diese Anforderungen werden insbesondere mit Hilfe eines Sammelstückes der vorstehend genannten Art erreicht, das derart ausgestaltet ist, daß zwischen dem Boden des topfbodenförmigen Teils und dem spitzen Ende des kegelstumpfförmigen Teils ein innenliegender Bajonettverschluß ist.

Eine besonders leichte Einstellung des Sammelstücks auf die erste und die zweite Drehstellung der Gleitflächen zueinander läßt sich in diesem Fall besonders leicht dadurch erreichen, daß die Führungen des Bajonettverschlusses zwei der ersten und der zweiten Drehstellung der Gleitflächen zugeordnete Rastvertiefungen aufweisen.

Für eine gute Handhabbarkeit des Sammelstücks im praktischen Betrieb ist es weiterhin zweckmäßig, wenn eine unbeabsichtigte Zerlegung des Sammelstücks verhindert wird. Dies kann zweckmäßigerweise dadurch erreicht werden, daß die Führungen des Bajonettverschlusses zwischen ihren Einführöffnungen und den Rastvertiefungen für die erste und die zweite Drehstellung jeweils eine Sperre in Form einer Erhöhung in der Kurvenbahn derart aufweisen, daß der Bajonettverschluß nur unter axialer Verschiebung des topfbodenförmigen Teils gegenüber dem kegelstumpfförmigen Teil entgegen der Kraft einer Feder durch Drehung des topfbodenförmigen Teils und des kegelstumpfförmigen Teils gegeneinander lösbar ist.

Wie bereits durch das Prinzip des Melkbechers mit Ventil bekanntgeworden ist, bei dem in Abhängigkeit von der Steuerung durch den Pulsatordruck Atmosphärenluft im Entlastungstakt in den Innenraum des Melkbechers eingelassen wird, kann dieser Lufteinlaß auch unterhalb des Melkbechers oder auch am Sammelstück erfolgen. Eine besonders günstige Ausgestaltung läßt sich nun dadurch erreichen, daß ein derartiges Druckentlastungsventil direkt mit dem Sammelstück kombiniert wird. Vorzugsweise wird hierbei die Anordnung derart getroffen, daß an dem Pulsatordruckverteilerstück bei Gleichtaktbetrieb ein bzw. bei Wechseltaktbetrieb zwei Druckentlastungsventile vorgesehen sind, das bzw. die jeweils eine Membran enthalten, die auf ihrer einen Seite durch eine Feder vorgespannt und mit einer Zuleitung zu dem Pulsatordruckverteilerstück verbunden ist und die auf ihrer anderen Seite mit einem beweglichen Verschlußstück verbunden ist, das bei Unterdruck in der Pulsatorleitung eine Verbindungsleitung unterbricht, die die Atmosphäre mit jeweils einer Zuleitung zu dem Innenraum eines Melkbechers verbindet.

Eine andere vorzugsweise Ausgestaltung zeichnet sich dadurch aus, daß an dem Pulsatordruckverteilerstück bei Gleichtaktbetrieb ein bzw. bei Wechseltaktbetrieb zwei Druckentlastungsventile vorgesehen sind, das bzw. die jeweils aus einem Kugelrückschlagventil bestehen, das einerseits mit einer Zuleitung zu dem Pulsatordruckverteilerstück verbunden ist, und andererseits mit allen Zuleitungen zu den Melkbechern im Gleichtaktbetrieb bzw. mit jeweils zwei Zuleitungen zu den Melkbechern bei Zweitaktbetrieb verbunden ist.

Im folgenden soll die Erfindung näher anhand von in der Zeichnung dargestellten vorzugsweisen Ausführungsbeispielen erläutert werden. In der Zeichnung zeigt:

Fig. 1 eine Ausführungsform eines gemäß der Erfindung ausgebildeten Viertelgemelkssammelstücks in perspektivischer Darstellung,

Fig. 2 eine Draufsicht auf das untere Teil des in Fig. 1 gezeigten Sammelstücks, nachdem das Oberteil abgenommen worden ist,

Fig. 3 eine ähnliche Ansicht wie in Fig. 2 eines abgewandelten Sammelstücks,

Fig. 4 einen senkrechten Längsschnitt durch eine andere Ausführungsform eines Sammelstücks,

Fig. 5 eine abgerollte Darstellung der Führungen für den Bajonettverschluß,

Fig. 6 eine Darstellung eines weiteren Ausführungsbeispiels, wobei lediglich eine obere Hälfte des Sammelstücks entsprechend Fig. 4 dargestellt ist, und

Fig. 7 eine ähnliche Darstellung wie in Fig. 6 einer anderen Ausführungsform eines Sammelstücks, wobei lediglich der der Fig. 4 entsprechende rechte Teil des oberen Teils des Sammelstücks dargestellt ist.

Das in Fig. 1 gezeigte, allgemein mit 1 bezeichnete Viertelgemelkssammelstück besteht aus zwei voneinander trennbaren Teilen 2 und 3, die mit Hilfe einer Rändelmutter 4 zusammengehalten werden, die auf einen mit Gewinde versehenen und aus dem oberen Teil 3 vorstehenden Bolzen 5 (Fig. 2) aufschraubbar ist. Das untere Teil 2 weist eine etwa kegelstumpfförmige Gestalt auf und von der oberen ebenen Fläche 6 aus erstreckt sich eine konische Fläche 7 nach abwärts und auswärts. Diese Fläche 7 ist als Gleitfläche ausgebildet. In die konische Gleitfläche 7 münden die Enden 8, 9, 10 und 11 von Milchabführrohren 12, 13, 14 und 15. An der Fläche 6 ist der nach aufwärts vorstehende Gewindebolzen 5 befestigt. Das obere Teil 3 des Sammelstücks besteht aus einem ebenfalls kegelstumpfförmigen Teil 16, an dessen nach abwärts und außen verlaufender konischer Fläche an der Innenseite eine der Gleitfläche 7 entsprechende nichtgezeigte Gleitfläche ausgebildet ist. In diese Gleitfläche münden die Enden von Rohren, an die Zuleitungen zu den Innenräumen von jeweils einem zugeordneten Melkbecher anschließbar sind. Mit dem oberen kegelstumpfförmigen Teil 16 ist weiterhin aus einem Stück ausgebildet oder hieran befestigt ein etwa zylinderförmiges Pulsatordruckverteilerstück 21. Das gezeigte Pulsatordruckverteilerstück ist für den Wechseltaktbetrieb bestimmt und weist zwei im Gegentakt betriebene Zuleitungen 22 bzw. 23 auf. Die Zuleitung 22 ist jeweils mit den Anschlußstutzen 24 und 25 und die Zuleitung 23 jeweils mit den Anschlußstutzen 26 und 27 verbunden. Die Anschlußstutzen 24, 25, 26 und 27 können jeweils mit den Pulsatordruckeinlässen entsprechender Melkbecher verbunden werden. Die beiden Teile 2 und 3 sind um ihre senkrechte Längsachse derart verdrehbar, daß ihre Gleitflächen aufeinander gleiten und die beiden Teile 2 und 3 können zwischen einer ersten und einer zweiten Drehstellung gegeneinander verdreht werden. Die Mündungen der Rohre 17, 18, 19 und 20 in dem oberen Teil 3 sind gerade derart angeordnet, daß diese Mündungen in einer ersten Drehstellung der beiden Teile 2 und 3 gegeneinander mit den Enden 8, 9, 10 und 11 der Rohre 12 bis 15 ausgerichtet sind und daß in einer zweiten Drehstellung die Mündungen der Rohre 17 bis 20 durch die untere Gleitfläche 7 und die Enden 3 bis 11 der Rohre 12 bis 15 durch die obere Gleitfläche des oberen Teils 3 verschlossen werden. Auf diese Weise können durch eine einfache Verdrehung der Teile 2 und 3 gegeneinander alle vier Rohre 12 bis 15 mit jeweils den Rohren 17 bis 20 in Verbindung gebracht werden. Um die jeweilige Drehstellung leicht zu finden und diese genau einstellen zu können, ist in dem oberen Teil 3 eine Rastvorrichtung in Form einer durch eine Feder vorgespannten Kugel vorgesehen, während in der Fläche 6 des unteren Teils 2 korrespondierende Rastausnehmungen 28, 29 und 30 vorgesehen sind.

In Fig. 3 ist eine abgewandelte Ausführungsform dargestellt. Die den in Fig. 2 gezeigten Teilen entsprechenden Teile sind mit gleichen jedoch mit einem Strich versehenen Bezugszeichen bezeichnet. Hierauf soll nicht weiter eingegangen werden. Bei dieser Ausführungsform sind an dem unteren Teil 2' zwei weitere Pulsatordruckzuführleitungen 31, 32 vorgesehen, die in in der Gleitfläche 7' liegenden Öffnungen 33, 34 münden. Entsprechend sind die in Fig. 1 gezeigten Pulsatordruckzuführleitungen 22 und 23 derart abgeändert, daß ihre in Fig. 1 sichtbaren offenen Enden in der oberen Gleitfläche des oberen Teils 3 an Stellen münden, die den Drehstellungen der Öffnungen 33 und 34 in der unteren Gleitfläche 7' entsprechen. Bei dieser Ausführungsform erfolgt also die Zufuhr des Pulsatordrucks über die Leitungen 31 und 32. Wichtig ist, daß natürlich die in der oberen Gleitflächen mündenden Rohre 22 und 23 in derselben Drehstellung der beiden Teile 2 und 3 miteinander ausgerichtet sind, wenn auch die Öffnungen der Milchleitungen 12' bis 15' und 17' bis 20' miteinander ausgerichtet sind. Auf diese Weise läßt sich durch eine einfache Drehung der beiden Teile 2 und 3 gegeneinander gleichzeitig der Unterdruck in den Innenräumen der Melkbecher wie auch der Pulsatordruck an den einzelnen Melkbechern anlegen.

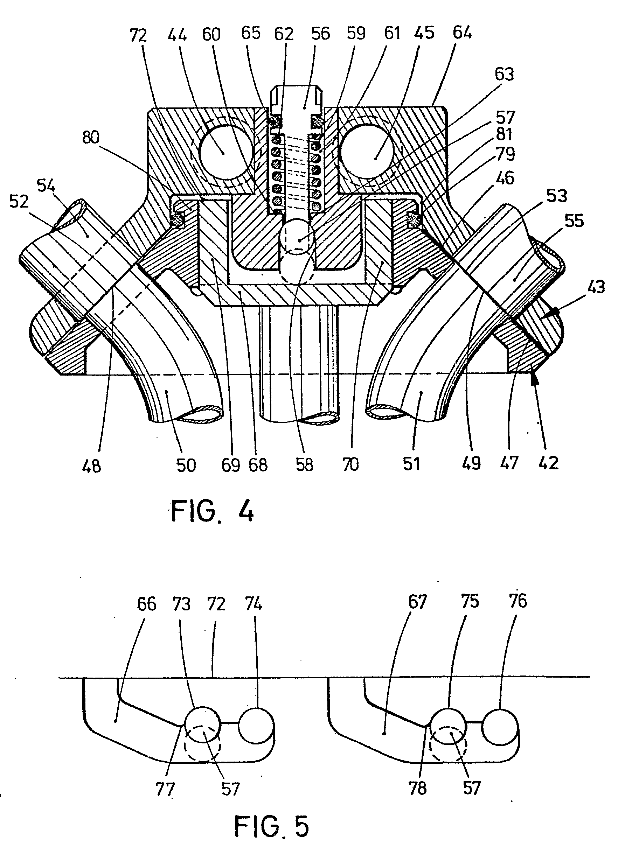

In Fig. 4 ist eine ähnliche Ausführungsform wie in Fig. 1 dargestellt, die sich gegenüber dieser Ausführungsform lediglich durch die Art der Verbindung des oberen und des unteren Teils 42 und 43 miteinander sowie die Art der Rastung in den jeweiligen Drehstellungen unterscheidet. Im oberen topfbodenförmigen Teil 43 sind lediglich die den Rohren 22 und 23 in Fig. 1 entsprechenden Zuleitungsrohre für den Pulsatordruck angedeutet, während die übrigen Stutzen als Zuleitungen zu den einzelnen Melkbechern nicht gezeigt sind. Das obere Teil 43 weist gleichfalls eine konische Gleitfläche auf seiner Unterseite auf, während das untere Teil 42 eine entsprechende konische Gleitfläche 47 an seiner Oberseite aufweist. Das untere und das obere Teil 42 und 43 sind in einer solchen Stellung dargestellt, in der die in der unteren Gleitfläche 47 liegenden Öffnungen 48 und 49 der Milchabführrohre 50 und 51 mit den in der oberen Gleitfläche 46 liegenden Öffnungen 52 und 53 der Stutzen 54 und 55 ausgerichtet sind, die mit jeweils dem Innenraum eines Melkbechers verbindbar sind.

Konzentrisch zu der Drehachse des unteren und des oberen Teils 42 und 43 ist ein in Längsrichtung dieser Drehachse verschiebbarer Stößel 56 angeordnet. Der Stößel weist an seinem unteren Ende einen zylinderförmigen Stift 57 auf, der in einem senkrecht verlaufenden Schlitz 58 in dem oberen Teil 43 geführt ist. Eine Schraubenfeder 59 wirkt derart zwischen einer Schulter 60, einer Bohrung 61 und einem Bund 62 an dem Stößel 56, daß der Stift 57 gegen eine Schulter 63 in dem Schlitz 58 anliegt. In dieser Ruhestellung steht das obere Ende des Stößels 56 über die obere Fläche 64 des oberen Teils 43 vor. Durch Druck auf das obere Ende des Stößels 56 kann der Stift 63 nach abwärts in die gestrichelte Stellung bewegt werden. Dadurch, daß der Stift 57 in dem Schlitz 58 geführt ist, ist also der Stößel 56 zwar in Axialrichtung verschiebbar, jedoch drehfest in Bezug auf das obere Teil 43 festgelegt. Der Stift 57 wird somit zusammen mit einer Verdrehung des oberen Teils 43 verdreht. An dem Bund 62 des Stößels 56 ist in eine Aussparung ein O-Ring eingelegt, der den Stößel gegen die Bohrung 61 abdichtet.

Der Stift 57 hat eine solche Länge, daß seine Enden seitlich über den Schlitz 58 hinausragen und in Form eines Bajonettverschlusses in Führungen 66 und 67 (Fig. 5) vorstehen, die in den Seitenwänden 69, 70 des topfförmigen Teils 68 ausgespart sind. Das topfförmige Teil ist fest mit dem unteren Teil 42 zu einem insgesamt zu einem topfbodenförmig ausgebildeten kegelstumpfförmigen Teil verbunden.

In dem oberen Teil 43 sind den Zuleitungen 22, 23 in Fig. 1 entsprechende Zuleitungen 44, 45 vorgesehen.

Die in Fig. 5 in der Abrollung gezeigten Führungen 66 und 67 beginnen jeweils an der Oberseite 72 des topfförmigen Teils 68. Beim Zusammenfügen der Teile 42 und 43 werden die Enden des Stiftes 57 durch axiale Verschiebung der Teile gegeneinander in die Führungen 66, 67 eingeführt und sodann durch Verdrehung der Teile 42 und 43 gegeneinander in diesen Führungen entsprechend einem Bajonettverschluß weitergeführt. Die Führungen weisen jeweils zwei Rastungen 73 und 74 bzw. 75 und 76 auf, in die die Enden des Stiftes 57 jeweils einrasten können. Dabei entsprechen die Rastungen 73 und 75 einer ersten Drehstellung und die Rastungen 74 und 76 einer zweiten Drehstellung der beiden Teile 42 und 43 gegeneinander. In der ersten Drehstellung sind sämtliche Öffnungen in den Gleitflächen 46 und 47 miteinander ausgerichtet, während in der zweiten Drehstellung sämtliche Öffnungen durch die Gleitflächen verschlossen sind. Um ein zufälliges, ungewolltes Öffnen des Bajonettverschlusses zu verhindern, sind in den Kurvenbahnen der Führungen 66 und 67 jeweils eine Sperre in Form einer Erhöhung 77 bzw. 78 vorgesehen. Diese Erhöhungen sind so ausgebildet, daß sie nicht bei einer normalen Verdrehung der Teile 42 und 43 gegeneinander überwunden werden. Vielmehr muß zu ihrer Überwindung zusätzlich der Stößel 56 nach einwärts gedrückt werden, so daß der Stift 57 in die in gestrichelten Linien in den Führungen 66 und 67 gezeigten Stellung zu liegen kommt. In dieser Stellung ist sodann bei einer Verdrehung der Teile 42 und 43 gegeneinander ein Öffnen des Bajonettverschlusses möglich.

Um ein Eindringen von Milch in die Räume des Bajonettverschlusses zu verhindern, ist neben dem bereits genannten O-Ring 65 ein weiterer O-Ring 79 vorgesehen, der in einer geeigneten Ringaussparung in einem kurzen zylindrischen Verlängerungsstück des im Ganzen etwa kegelstumpfförmigen Teils 42 angeordnet ist. Der O-Ring 79 liegt dichtend gegen die Innenwand 81 des oberen Teils 43 an.

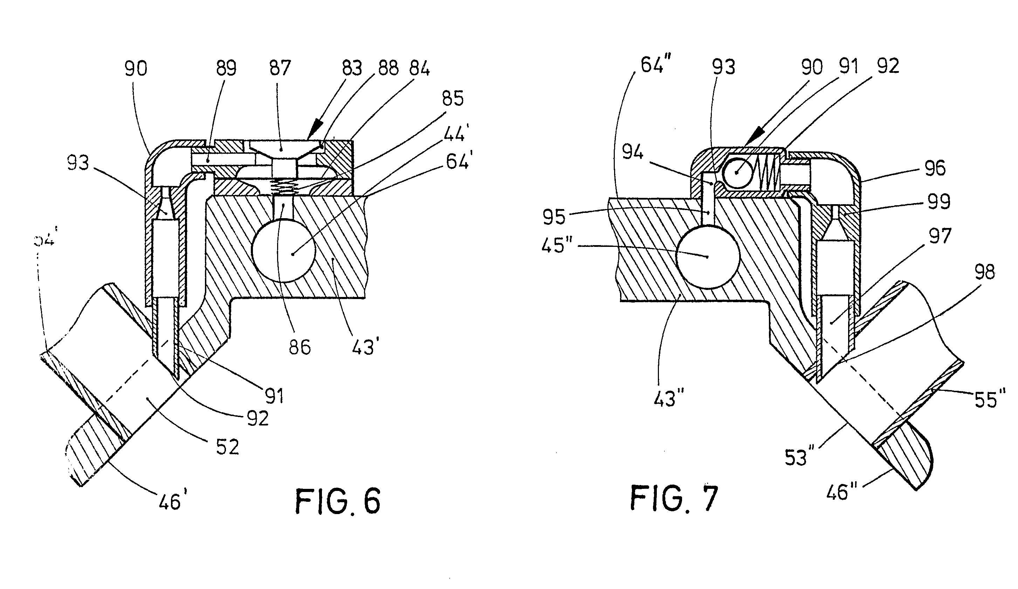

In den Fig. 6 und 7 sind gegenüber der Fig. 4 abgeänderte Ausführungsformen nur in einer Teilansicht dargestellt. Die mit der Fig. 4 übereinstimmenden Teile sind mit denselben Bezugszeichen unter Hinzufügung eines einfachen bzw. eines Doppelstriches bezeichnet. In Fig. 6 ist auf der Oberseite 64' des oberen Teils 43' ein Ventil 83 angebracht. Das Ventil 83 weist eine Membran 84 auf, deren eine Seite durch eine Feder 85 vorgespannt ist. Gleichzeitig ist diese Seite der Membran über eine Bohrung 86 mit der Pulsatorleitung 44' verbunden. An der anderen Seite der Membran ist ein Verschlußstück 87 befestigt, das im geschlossenen Zustand des Ventils gegen einen Ventilsitz 88 anliegt und dadurch die Verbindung der Atmosphäre mit dem Inneren einer Leitung 89 unterbindet. Die Leitung 89 steht über ein durchsichtiges Rohr 90 mit einem Stutzen 91 in Verbindung, der in die Zuleitung 54' zu dem Inneren eines Melkbechers vorsteht. Das in diese Zuleitung vorstehende Ende 92 ist vorzugsweise parallel zu der Innenwand des Stutzens 54' abgeschnitten. In dem durchsichtigen Rohr 90 ist weiterhin eine Drosselstelle 93 ausgebildet, die den Luftdurchsatz durch das Rohr 90 begrenzt. Die Öffnung der Drossel 93 liegt etwa im Bereich von 1 mm.

Die Funktionsweise des Ventils ist derart, daß das Verschlußstück 87 dichtend gegen den Ventilsitz 88 anliegt, wenn in der Saugphase sowohl in dem Stutzen 54' als auch in dem Pulsatorunterdruckrohr 44' Unterdruck herrscht. Sobald jedoch bei Beginn der Entlastungsphase der Druck in dem Pulsatorunterdruckrohr 44' ansteigt, wird das Verschlußstück 87 von dem Ventilsitz 88 angehoben und damit das Ventil geöffnet, so daß Atmosphärenluft über die Leitung 89, das Rohr 90 und den Stutzen 91 in den Stutzen 54' und somit in das Innere eines Melkbechers gelangen kann. Auf diese Weise findet eine Druckentlastung der Zitze im Melkbecher statt. Bei erneuter Absenkung des Drucks in der Pulsatordruckleitung 44' in der Saugphase wird sodann das Ventil 83 wieder geschlossen und damit der Zustrom von Atmosphärenluft unterbunden.

In Fig. 7 ist auf der oberen Fläche 64'' des oberen Teils 43'' ein Rückschlagventil 90 vorgesehen. Das Rückschlagventil weist eine Kugel 91 auf, die durch eine Feder 92 gegen einen Ventilsitz 93 gedrückt wird. Der Ventilsitz 93 ist über eine Leitung 94 und eine Bohrung 95 mit der Pulsatorunterdruckleitung 45'' verbunden. Andererseits ist das Rückschlagventil über ein durchsichtiges Rohr 96 mit einem Stutzen 97 verbunden, der in den Stutzen 55'' hinein vorsteht, der mit dem Inneren eines der Melkbecher verbunden ist. Der Stutzen 97 steht derart ein Stück in den Stutzen 55'' vor, daß er eine Art Tropfnase bildet. Gleichzeitig ist das in den Stutzen 55'' hinein vorstehende Ende 98 des Stutzens 97 parallel zur Innenwand des Stutzens 55'' abgeschnitten. In dem Rohr 96 ist eine Drossel 99 mit einer minimalen Öffnung von etwa 1 mm vorgesehen.

Das Rückschlagventil 90 dient als Druckentlastungsventil und arbeitet derart, daß es geschlossen ist, wenn während des Saugtaktes im Melkbecher sowie in der Pulsatorunterdruckleitung 45'' wie in dem Stutzen 55'' Unterdruck herrscht. Wird jedoch zu Beginn des Entlastungstaktes der Druck in der Pulsatorunterdruckleitung 45'' erhöht, so öffnet das Rückschlagventil bei Überschreitung eines vorbestimmten Druckes und läßt Luft aus der Pulsatorunterdruckleitung 45" über die Leitung 96 und den Stutzen 97 in den Stutzen 55" und damit in das Innere des Melkbechers einströmen. Wird dagegen der Druck in der Pulsatorunterdruckleitung 45" während des Saugtaktes wieder abgebaut, schließt das Rückschlagventil wieder automatisch.

Zur Verbesserung der Gleitung zwischen den Gleitflächen hat es sich als zweckmäßig erwiesen, sofern das Verteilerstück aus Metall hergestellt ist, eine dieser Flächen mit einem Feststoff, etwa einem polymeren Kunststoff, zu beschichten. Als besonders günstig hat sich hierbei eine Beschichtung mit Polytetrafluoräthylen (Teflon) erwiesen.

**Patentansprüche**

1. Sammelstück mit einem ersten topfbodenförmigen Teil (3), dessen innere Mantelfläche sich konisch erweiternd nach außen erstreckt und als eine erste Gleitfläche ausgebildet ist, mit einem zweiten kegelstumpfförmigen Teil (2), dessen außenliegende Mantelfläche (7) als eine zweite Gleitfläche ausgebildet ist, die dichtend gegen die erste Gleitfläche anliegt, mit vier jeweils mit einem Melkbecher verbindbaren Zuleitungen (17, 20), deren Enden jeweils in der ersten Gleitfläche münden, und mit einer der Zahl der Zuleitungen entsprechenden Zahl von Ableitungen (12—15), wobei in einer ersten gegenseitigen Drehstellung des topfbodenförmigen Teils und des kegelstumpfförmigen Teils die Zu- und Ableitungen über Öffnungen (8—11) in der Mantelfläche des kegelstumpfförmigen Teils miteinander verbindbar und in einer zweiten Drehstellung jeweils absperrbar sind, dadurch gekennzeichnet, daß das kegelstumpfförmige Teil (2 bzw. 42, 68, 69, 70) ebenfalls topfbodenförmig ausgebildet ist und daß dessen Mantelwandung von den Ableitungen (12 bis 15 bzw. 50, 51) durchsetzt wird, die mit ihren Enden (8 bis 11 bzw. 48, 49) derart in den Öffnungen der zweiten Gleitfläche (7 bzw. 47) münden, daß in der ersten gegenseitigen Drehstellung des ersten und zweiten Teils (2, 3 bzw. 42, 43) die Ableitungen (12 bis 15 bzw. 50, 51) mit den entsprechenden Zuleitungen (17 bis 20 bzw. 54, 55) fluchten.

2. Sammelstück nach Anspruch 1, wobei mehrere, zu den einzelnen Melkbechern führende Pulsatorleitungen (24—27) vorgesehen sind, dadurch gekennzeichnet, daß ein Pulsatordruckverteilerstück (21) mit jeweils einer Zuleitung (24 bis 27) zu einem Melkbecher und einer Zuleitung (22) zu dem Verteilerstück (21) für Gleichtaktbetrieb oder zwei Zuleitungen (22, 23) zu dem Verteilerstück (21) für Wechseltaktbetrieb an dem ersten (3 bzw. 43) oder zweiten (2 bzw. 42) topfbodenförmigen Teil, vorzugsweise an dem ersten topfbodenförmigen Teil, ausgebildet ist.

3. Sammelstück nach Anspruch 2, dadurch gekennzeichnet, daß das Ende der einen Zuleitung (22) zu dem Pulsatordruckverteilerstück (21) für Gleichtaktbetrieb oder die Enden der beiden Zuleitungen (22, 23) zu dem Pulsatordruckverteilerstück (21) für Wechseltaktbetrieb jeweils in der ersten Gleitfläche münden und daß eine der Zahl der Zuleitungen (22, 23) zu dem Pulsatordruckverteilerstück entsprechende Zahl von Verbindungsleitungen (31, 32) mit dem Pulsator vorgesehen sind, deren Anfang bzw. Anfänge (33, 34) jeweils in der zweiten Gleitfläche (7') liegen und diese durchsetzen und daß das Ende der Zuleitung bzw. die Enden der Zuleitungen derart in Bezug auf den Anfang der Verbindungsleitung bzw. die Anfänge der Verbindungsleitungen angeordnet sind, daß diese in der ersten Drehstellung des topfbodenförmigen Teils und des kegelstumpfförmigen Teils miteinander ausgerichtet sind und in der zweiten Drehstellung jeweils von den beiden Gleitflächen verschlossen werden.

4. Sammelstück nach einem der Ansprüche 1 bis 3, dadurch gekennzeichnet, daß wenigstens eine der beiden Gleitflächen (7; 46, 47) mit einem die Gleitung verbessernden Feststoff beschichtet ist.

5. Sammelstück nach Anspruch 4, dadurch gekennzeichnet, daß der Feststoff aus Polytetrafluoräthylen besteht.

6. Sammelstück nach einem der Ansprüche 1 bis 5, dadurch gekennzeichnet, daß an dem topfbodenförmigen Teil und dem kegelstumpfförmigen Teil (2, 3) miteinander zusammenwirkende Rastvorrichtungen (28, 29, 30) ausgebildet sind, die in der ersten und zweiten Drehstellung der Teile miteinander einrasten.

7. Sammelstück nach einem der Ansprüche 1 bis 6, dadurch gekennzeichnet, daß zwischen dem Boden des topfbodenförmigen Teils (3, 43) und dem spitzen Ende des kegelstumpfförmigen Teils (2, 42) ein innenliegender Bajonettverschluß (56, 57; 66, 67) vorgesehen ist.

8. Sammelstück nach Anspruch 7, dadurch gekennzeichnet, daß in dem Boden des topfbodenförmigen Teils (43) ein diesen konzentrisch in Axialrichtung durchsetzender, durch eine Feder (59) nach auswärts vorgespannter Stößel (56) vorgesehen ist, daß an dem innenliegenden Ende des Stößels ein quer zu diesem verlaufender Stift (57) derart befestigt ist, daß der Stößel axial verschieblich, jedoch drehfest geführt ist und daß in dem dem topfbodenförmigen Teil (43) zugekehrten Ende des kegelstumpfförmigen Teils (42) zwei die Enden des Stiftes aufnehmende Führungen (66, 67) ausgebildet sind.

9. Sammelstück nach Anspruch 8, dadurch gekennzeichnet, daß die Führungen (66, 67) zwei der ersten und der zweiten Drehstellung der Gleitflächen entsprechende Rastvertiefungen (73, 74; 75, 76) aufweisen.

10. Sammelstück nach Anspruch 9, dadurch gekennzeichnet, daß die Führungen (66, 67) zwischen ihren Einführöffnungen und den Rastvertiefungen (73, 74; 75, 76) für die erste und die zweite Drehstellung jeweils eine Sperre in Form einer Erhöhung (77, 78) in der Kurvenbahn derart aufweist, daß der Bajonettverschluß nur unter axialer Einwärtsverschiebung des Stößels (56) entgegen einer erheblichen Kraft der Feder (59) durch Drehung des topfbodenförmigen Teils (43) und des kegelstumpfförmigen Teils gegeneinander lösbar ist.

11. Sammelstück nach einem der Ansprüche 2 bis 10, dadurch gekennzeichnet, daß an dem Pulsatordruckverteilungsstück (21, 43) bei Gleichtaktbetrieb ein bzw. bei Wechseltaktbetrieb zwei Druckentlastungsventile (83) vorgesehen sind, das bzw. die jeweils eine Membran (84) enthalten, die auf ihrer einen Seite durch eine Feder vorgespannt und mit einer Zuleitung (44', 86) zu dem Pulsatordruckverteilungsstück verbunden ist und die auf ihrer anderen Seite mit einem beweglichen Verschlußstück (87) verbunden ist, das normalerweise eine Verbindungsleitung unterbricht, die die Atmosphäre mit jeweils einer Zuleitung (54') zu dem Innenraum eines Melkbechers verbindet.

12. Sammelstück nach einem der Ansprüche 2 bis 10, dadurch gekennzeichnet, daß an dem Pulsatordruckverteilungsstück (21, 43) bei Gleichtaktbetrieb ein bzw. bei Wechseltaktbetrieb zwei Druckentlastungsventile (90) vorgesehen sind, das bzw. die jeweils aus einem Kugelrückschlagventil (90) bestehen, das einerseits mit einer Zuleitung zu dem Pulsatordruckverteilerstück verbunden ist und andererseits mit allen Zuleitungen (55') zu den Melkbechern im Gleichtaktbetrieb bzw. mit jeweils zwei Zuleitungen (55') zu den Melkbechern bei Wechseltaktbetrieb verbunden ist.

13. Sammelstück nach Anspruch 11 oder 12, dadurch gekennzeichnet, daß die Teile (90, 96) der Verbindungsleitungen zwischen einem Druckentlastungsventil (83, 90) und den Zuleitungen (54'; 55'') zu den Melkbechern durchsichtig sind.

14. Sammelstück nach einem der Ansprüche 11 bis 13, dadurch gekennzeichnet, daß die in die Zuleitungen (55'') zu den Melkbechern mündenden Verbindungsleitungen (91, 97) jeweils ein Stück in diese Zuleitungen (54'; 55'') vorstehen und derart angeordnet sind, daß die vorstehenden Enden bei zerlegtem Sammelstück (1) sichtbar sind.

**Claims**

1. Collector assembly with a first cup-shaped part (3), of which the internal peripheral surface extends conically outwardly and acts as a first slide surface, with a second, frusto-conical, part (2), of which the outwardly facing peripheral surface (7) acts as a second slide surface, which is applied sealingly against the first slide surface, with four communicating connections (17, 20) connectable with a respective milking cup, the ends of which discharge respectively at the first slide surface, and with a number of outlet communication connections (12—15) corresponding to the number of inlet connections, in a first opposed angular orientation of the cup-shaped and of the frusto-conical parts, the supply and discharge connections being connectable with one another through openings (8—11) in the peripheral surface of the frusto-conical part and in a second rotational orientation being respectively capable of being blocked off, characterised in this that the frusto-conical part (2 or respectively 42, 68, 69, 70) is likewise constructed with a cup-shape and that the peripheral wall thereof is traversed by outlet connections (12—15 or respectively 50, 51) which communicate with the openings of the second slide surface (7, or respectively 47) at their ends (8 to 11, or 48, 49) in such a manner that in the first opposed angular orientation of the first and the second parts (2, 3 or respectively 42, 43) the outlet connections (12—15 or 50, 51) are aligned with the corresponding supply connections (17 to 20 or respectively, 54, 55).

2. A collector assembly according to claim 1, in which a plurality of pulsator pipes (24—27) are provided leading to the individual milking cups, characterised in this that a pulsator pressure distributor member (21) is provided with a respective supply pipe (24—27) to one milking cup and a supply pipe (22) to the distributor member (21) for in-phase operation or with two supply pipes (22, 23) to the distributor member (21) for out-of-phase operation to the first (3 or respectively 43) or second (2 or respectively 42) cup-shaped part, preferably to the first cup-shaped part.

3. Collector assembly according to claim 2, characterised in this that the end of the one supply pipe (22) to the pulsator pressure distributor member (21) for in-phase operation or the ends of the two supply pipes (22, 23) to the pulsator pressure distributor member (21) for out-of-phase operation discharge respectively into the first slide surface and that a number of connection pipes (31, 32) with the pulsator are provided corresponding to the number of inlet pipes (22, 23) to the pulsator pressure distributor member, of which the commencement or respectively commencements (33, 34) lie respectively in the second slide surface (7') and traverse it and that the end of the supply pipe or respectively the ends of the supply pipes are arranged in such a manner in relation to the commencement of the connection pipe or the commencements of the connection pipes that these are aligned in the first angular orientation of the cup-shaped part and of the frusto-conical part with one another and in the second angular orientation are closed off from the two slide surfaces.

4. Collector assembly according to one of claims 1 to 3, characterised in this at least one of the two slide surfaces (7; 46, 47) is coated with a hard material which improves the sliding action between the parts.

5. Collector assembly according to claim 4, characterised in this that the hard material consists of polytetrafluoro-ethylene.

6. Collector assembly according to one of claims 1 to 5, characterised in this that the cup-shaped part and the frusto-conical part (2, 3) are provided with detent devices (28, 29, 30) which interact in the first and second angular orientations of the parts.

7. Collector assembly according to one of claims 1 to 6, characterised in this that between the base of the cup-shaped part (3, 43) and the pointed end of the frusto-conical shaped part (2, 42) an internal bayonet connection (56, 57; 66, 67) is provided.

8. Collector assembly according to claim 7, characterised in this that in the base of the cup-shaped part (43) a pin (56) outwardly biassed by a spring (59) is provided extending concentrically in the axial direction, that at the internal end of the pin a rod (57) is secured extending transversely thereto, that the pin is axially displaceable, but is held, however, fast against rotation and that there are provided in the end of the frusto-conical part (42) opposite to the cup-shaped end (43) two guides (66, 67) receiving the ends of the rod.

9. Collector assembly according to claim 8, characterised in this that the guides (66, 67) have two detent recesses (73, 74; 75, 76) corresponding to the first and second angular orientations of the slide surfaces.

10. Collector assembly according to claim 9, characterised in this that the guides (66, 67) have a lock in the form of a raised portion (77, 78) in the curved path of the guides (66, 67) between their introduction openings and the detent recesses (73, 74; 75, 76) for the first and second angular orientations in such a manner that the bayonet connection is only releasable by axial inwards displacement of the pin (56) against a substantial force of the spring (59) by rotation of the cup-shaped part (43) and of the frusto-conical shaped part in relation to one another.

11. Collector assembly according to one of claims 2 to 10, characterised in this that one or two pressure-loaded valves (83) is/are provided in the pulsator pressure distribution member (21, 43) respectively for in-phase operation or for out-of-phase operation, the or each of which incorporates a membrane (84) which is biassed on its one side by a spring and is connected with a supply passage (44', 86) to the pulsator pressure distribution member and which is connected with a movable closure member (87) at its other side, which normally interrupts a communication passage which connects the atmosphere with a supply passage (54') to the internal space of a milking cup.

12. Collector assembly according to one of claims 2 to 10, characterised in this that one or two pressure-loaded valves (90) is/are provided on the pulsator pressure distribution member (21, 43) respectively for in-phase operation or for out-of-phase operation, the or each of which consists of a non-return ball valve (90), which on the one hand is connected with a supply passage to the pulsator pressure distribution member and on the other hand is connected with all the supply pipes (55') to the milking cups during in-phase operation or with only two supply pipes (55') to the milking cups during out-of-phase operation.

13. Collector assembly according to claims 11 or 12, characterised in this that the parts (90, 96) of the communication pipes between a pressure-loaded valve (83, 90) and the supply pipes (54'; 55'') to the milking cups are transparent.

14. Collector assembly according to one of claims 11 to 13, characterised in this that the communication passages (91, 97) discharging into the supply pipes (55'') to the milking cups project slightly into these pipes (54'; 55'') and are so mounted that the projecting ends of the disassembled collector assembly (1) are visible.

## Revendications

1. Pièce collectrice qui comprend une première partie en forme de fond de pot (3) dont la surface périphérique intérieure s'évase en cône vers l'extérieur et forme une première surface de glissement, une seconde partie tronconique (2) dont la surface périphérique extérieure (7) constitue une seconde surface de glissement qui s'applique de manière étanche contre la première, quatre conduits d'arrivée (17, 20) pouvant être reliés respectivement à un godet de trayeuse, dont les extrémités respectives débouchent à la première surface de glissement, et un nombre de conduits de départ (12, 15) correspondant à celui des conduits d'arrivée, l'arrangement étant tel que dans une première position angulaire mutuelle des parties en forme de fond de pot et tronconique les conduits d'arrivée et de départ peuvent être reliés ensemble par des orifices (8, 11), tandis que dans une seconde position angulaire, ils peuvent être respectivement fermés, caractérisée en ce que la partie tronconique (2 ou 42, 68, 69, 70) a aussi la forme d'un fond de pot et en ce que sa surface périphérique est traversée par les conduits de départ (12 à 15 à 50, 51), dont les extrémités débouchent de telle manière dans les orifices de la seconde surface de glissement (7 ou 47) que dans la première position angulaire mutuelle de la première et de la seconde parties (2, 3 ou 42, 43) les conduits de départ (12 à 15 ou 50, 51) coïncident avec les conduits d'arrivée correspondants (17 à 20 ou 54, 55).

2. Pièce collectrice selon la revendication 1, dans le cas où plusieurs conduits de pulsateur (24 à 27) aboutissant aux différents godets de trayeuse sont prévus, caractérisée en ce qu'un distributeur de pression de pulsateur (21) comporte un conduit d'arrivée (24 à 27) aboutissant à un godet de trayeuse et un conduit d'arrivée (22) aboutissant au distributeur (21) pour assurer un fonctionnement synchronisé ou bien comporte deux conduits d'arrivée (22, 23) vers le distributeur (21) pour un fonctionnement alternatif à la première (3 ou 43) ou à la seconde (2 ou 42) partie en vorme de fond de pot, de préférence à la première partie en forme de pot.

3. Pièce collectrice selon la revendication 2, caractérisée en ce que l'extrémité de l'un des conduits d'arrivée (22) débouche dans la première surface de glissement du distributeur de pression de pulsateur (21) pour le fonctionnement synchronisé ou bien en ce que les extrémités des deux conduits (22, 23) débouchent dans la première surface de glissement du distributeur de pression de pulsateur (21) pour le fonctionnement alternatif et en ce que un nombre de conduits de liaison (31, 32) avec le pulsateur sont prévus correspondant à celui des conduits d'arrivée (22, 23) aboutissant au distributeur de pression de pulsateur, le ou les commencements (33, 34) des conduits de liaison étant situés respectivement dans la seconde surface de glissement (7') et traversent celle-ci et en ce que l'extrémité du conduit d'arrivée ou les extrémités des conduits d'arrivée sont disposées de telle manière par rapport au commencement du conduit de liaison ou aux commencements des conduits de liaison que celles-ci sont alignées dans la première position angulaire de la partie en forme de fond de pot et de la partie tronconique et sont isolées dans la seconde position angulaire des deux surfaces de glissement.

4. Pièce collectrice selon l'une quelconque des revendications 1 à 3, caractérisée en ce que l'une au moins des deux surfaces de glissement (7; 46, 47) est couverte d'une matière solide améliorant le glissement.

5. Pièce collectrice selon la revendication 4, caractérisée en ce que cette matière solide est du polytétrafluoroéthylène.

6. Pièce collectrice selon l'une quelconque des revendications 1 à 5, caractérisée en ce que la partie en forme de fond de pot et la partie tronconique (2, 3) comportent des dispositifs d'encliquetage coopérants (28, 29, 30) qui dans la première et dans la seconde positions angulaires s'engagent mutuellement.

7. Pièce collectrice selon l'une quelconque des revendications 1 à 6, caractérisée en ce que entre le fond de la partie en forme de fond de pot (3, 43) et l'extrémité pointue de la partie tronconique (2, 42) une fermeture à baïonnette intérieure (56, 57; 66, 67) est prévue.

8. Pièce collectrice selon la revendication 7, caractérisée en ce que le fond de la partie en forme de fond de pot (43) est prévu un poussoir (56) sollicité vers l'extérieur par un ressort (59), qui traverse celle-ci concentriquement dans le sens axial, en ce que à l'extrémité intérieure du poussoir est fixée une goupille transversale (57) de telle sorte que ledit poussoir peut se déplacer axialement, tout en étant empêché de tourner et en ce que, dans l'extrémité de la partie tronconique (42) tournée vers la partie en forme de fond de pot (43), des guides (66, 67) sont prévus qui reçoivent les extrémités de la goupille.

9. Pièce collectrice selon la revendication 8, caractérisée en ce que les guides (66, 67) présentent des refoncements de repos (73, 74; 75, 76) qui correspondent à la première et à la seconde positions angulaires des surfaces de glissement.

10. Pièce collectrice selon la revendication 9, caractérisée en ce que entre leurs extrémités d'entrée et les renfoncements de repos (73, 74; 75, 76), correspondant à la première et à la seconde positions angulaires, les guides (66, 67) présentent un blocage sous la forme d'une élévation (77, 78) de la piste de guidage, de sorte que la fermeture à baïonnette ne peut être dégagée qu'en exerçant une poussée axiale considérable vers l'intérieur sur le poussoir (56), à l'encontre de la force considérable du ressort (59), en tournant la partie en forme de fond de pot (43) par rapport à la partie tronconique.

11. Pièce collectrice selon l'une quelconque des revendications 2 à 10, caractérisée en ce que, sur le distributeur de pression de pulsateur (21, 43) sont prévues, lors du fonctionnement synchronisé une valve et lors du fonctionnement alternatif deux valves de décompression (83) renfermant respectivement une membrane (84) dont l'un des côtés est précontraint par un ressort et qui est reliée par un conduit (44', 86) avec la distributeur de pression de pulsateur, tandis que de l'autre côté elle comporte un obturateur mobile (87) qui, normalement, ferme un conduit de liaison qui relie l'espace intérieur d'un godet de trayeuse à l'atmosphère par un conduit (54').

12. Pièce collectrice selon l'une quelconque des revendications 2 à 10, caractérisée en ce que au distributeur de pression de pulsateur (21, 43) sont prévues, pour le fonctionnement synchronisé une et pour le fonctionnement alternatif deux valves de décompression (90), qui sont constituées respectivement par un clapet à bille (90) qui, d'une part, est relié à un conduit aboutissant au distributeur de pression de pulsateur et, d'autre part, à tous les conduits (55') aboutissant aux godets de trayeuse dans le fonctionnement synchronisé et à deux conduits (55') aboutissant aux godets de trayeuse dans le fonctionnement alternatif.

13. Pièce collectrice selon la revendication 11 ou 12, caractérisée en ce que les parties (90, 96) des conduits de liaison comprises entre une valve de décompression (83, 90) et les conduits (54'; 55") aboutissant aux godets de trayeuse sont transparentes.

14. Pièce collectrice selon l'une quelconque des revendications 11 à 13, caractérisée en ce que les conduits de liaison (91, 97) débouchant dans les conduits (55") allant vers les godets de trayeuse dépassent sur une certaine longueur dans ces conduits (54'; 55") et sont disposés de telle sorte que ces extrémités dépassantes sont visibles quand la pièce collectrice (1) a été démontée.

FIG.1

FIG. 2

FIG.3

FIG. 4

FIG. 5

FIG. 6

FIG. 7

0 009 149